# EUROPÄISCHE PATENTANMELDUNG

(11) **EP 1 063 181 A1**
(43) Veröffentlichungstag der Anmeldung: **27.12.2000**
(21) Anmeldenummer: 00112034.4
(22) Anmeldetag: 02.06.2000
(51) Int. Cl.: B65G 9/00

(54) **Transportgestell für Hängeförderung**

(30) Priorität: 07.06.1999 DE 19925912
(71) Anmelder: WF Logistik GmbH, 86899 Landsberg (DE)
(72) Erfinder: Philippin, Holger, 82194 Gröbenzell (DE)
(74) Vertreter: Tiesmeyer, Johannes, Dr.

(57) **Zusammenfassung**

Bei einem Transportgestell (10) für Hängeförderung, das an wenigstens einem mit einem Rollenpaar zur Abstützung an einer Schiene (26) versehenen Laufwerk (24) hängend längs der Schiene (26) verfahrbar ist und eine Rückwand (12) sowie zwei von der Rückwand (12) nach vorn abstehende Seitenwände (14) aufweist, zwischen denen wenigstens ein Tragboden (16) in einer im wesentlichen horizontalen Transportstellung fixierbar ist, wird vorgeschlagen, daß die Seitenwände (14) starr von der Rückwand (12) abstehen, derart, daß der Abstand zwischen den vorderen Rändern der Seitenwände (14) größer ist als die Breite der Rückwand (12), so daß mehrere Transportgestelle (10) mit aus der Transportstellung entfernten Tragböden (16) ineinander stapelbar sind.

## Beschreibung

Die vorliegende Erfindung betrifft ein Transportgestell für Hängeförderung, das an wenigstens einem mit einem Rollenpaar zur Abstützung an einer Schiene versehenen Laufwerk hängend längs der Schiene verfahrbar ist und eine Rückwand sowie zwei von der Rückwand nach vorn abstehende Seitenwände aufweist, zwischen denen wenigstens ein Tragboden in einer im wesentlichen horizontalen Transportstellung fixierbar ist.

Derartige Transportgestelle werden beispielsweise in Warenlagern eingesetzt, um Waren wie z.B. Kleidungsstücke zwischen verschiedenen Bereichen des Lagers zu transportieren. Hierzu verlaufen in bekannter Weise zwischen den entsprechenden Bereichen des Warenlagers beispielsweise an der Decke des Lagers angebrachte Schienen, längs derer Transportgestelle der oben genannten Art verfahrbar sind. Jedes Transportgestell weist normalerweise wenigstens einen Tragboden, in der Regel mehrere Tragböden auf, auf denen die zu transportierenden Waren liegen, wobei sie durch die Rückwand und die beiden Seitenwände des Transportgestells weitgehend gegen ein Herunterfallen während des Transports geschützt sind.

Aufgrund dieses voluminösen Aufbaus weisen derartige Tranportgestelle einen hohen Platzbedarf auf. Die in Warenlagern wichtige Maßnahme, einen bestimmten Vorrat an derartigen Transportgestellen vorzusehen, um beispielsweise bei einer plötzlichen Zunahme der zu transportierenden Warenmenge flexibel reagieren zu können, erfordert daher einen beträchtlichen zusätzlichen Lagerraum für die in Vorrat gehaltenen Transportgestelle. Ist solcher zusätzlicher Lagerraum nicht vorhanden, so können keine oder nur wenige zusätzliche Transportgestelle in Vorrat gehalten werden, so daß eine unvorhergesehene Zunahme der zu transportierenden Warenmenge nicht oder nur schlecht bewältigt werden kann.

Ein Transportgestell der oben genannten Art, welches dieses Problem weitgehend vermeidet, ist aus der DE 33 44 659 bekannt. Bei diesem Transportgestell sind die Seitenwände schwenkbar an der Rückwand angelenkt und die Tragböden anklappbar mit der Rückwand verbunden und an den Seitenwänden in horizontaler Stellung abstützbar. Auf diese Weise läßt sich ein momentan nicht benötigtes Transportgestell durch Herabklappen der Tragböden und Einklappen der Seitenwände auf die Rückwand in eine platzsparende Anordnung umwandeln. Das Transportgestell gemäß der DE 33 44 659 weist jedoch den Nachteil einer komplizierten Herstellung auf, da die Rückwand und die Seitenwände getrennt gefertigt und anschließend gelenkig zusammengefügt werden müssen. Darüber hinaus ist bei diesen Transportgestellen auch die Verbindung mit dem Laufwerk kompliziert, da hierfür oben an den Seitenwänden drehbar gelagerte Ösen erforderlich sind, die auf einer mit dem Laufwerk verbundenen Stange verschiebbar sind.

Es ist daher Aufgabe der vorliegenden Erfindung, Transportgestelle der eingangs genannten Art bereitzustellen, welche platzsparend gelagert werden können und dabei die mit klappbaren Wänden verbundenen Herstellungs- und Betriebsprobleme vermeiden.

Diese Aufgabe wird bei einem Transportgestell der eingangs genannten Art dadurch gelöst, daß die Seitenwände starr von der Rückwand abstehen, derart, daß der Abstand zwischen den vorderen Rändern der Seitenwände größer ist als die Breite der Rückwand, so daß mehrere Transportgestelle mit aus der Transportstellung entfernten Tragböden ineinander stapelbar sind.

Ein Vorteil des erfindungsgemäßen Transportgestells besteht darin, daß aufgrund der starren Verbindung der Rückwand mit den beiden Seitenwänden diese drei Wände einstückig hergestellt werden können. So ist es bei geeignetem Material möglich, eine beispielsweise im wesentlichen rechteckförmige Platte herzustellen und deren Randbereiche derart gegenüber dem Mittelbereich der Platte abzuknicken, daß die abgeknickten Randbereiche die Seitenwände und der Mittelbereich die Rückwand des erfindungsgemäßen Transportgestells bilden.

Selbstverständlich ist es auch möglich, die Rückwand und die Seitenwände getrennt herzustellen und anschließend starr miteinander zu verbinden, beispielsweise je nach Art des gewählten Materials durch Verschrauben, Verschweißen, Verkleben und dgl.

Der Abstand zwischen den vorderen Rändern der Seitenwände, der beim erfindungsgemäßen Transportgestell größer ist als die Breite der Rückwand, ergibt sich aus den Breiten der Seitenwände und aus dem Winkel, unter dem sie von der Rückwand nach vorne abstehen. Durch geeignete Wahl dieser Größen kann dafür gesorgt werden, daß der Abstand zwischen den vorderen Rändern der Seitenwände soviel größer ist als die Breite der Rückwand, daß erfindungsgemäße Transportgestelle einfach und schnell ineinander gestapelt werden können, ohne daß sie hierzu vorher präzise ausgerichtet werden müssen.

Das erfindungsgemäß vorgesehene Entfernen des wenigstens einen Tragbodens aus seiner Transportstellung kann dadurch ermöglicht werden, daß er zwischen der Transportstellung und einer im wesentlichen vertikalen Lagerstellung verschwenkbar an der Rückwand oder einer Seitenwand angelenkt ist, so daß mehrere Transportgestelle mit in Lagerstellung befindlichen Tragböden ineinander stapelbar sind. Diese Ausführung weist den Vorteil auf, daß der wenigstens eine Tragboden stets am Transportgestell verbleibt und dieses somit immer vollständig ist. Darüber hinaus erlaubt es die Verschwenkbarkeit von Tragböden zwischen einer im wesentlichen horizontalen Transportstellung und einer im wesentlichen vertikalen Lagerstellung auch, einzelne Tragböden beim Betrieb des erfindungsgemäßen Transportgestells vorübergehend "wegzuklappen", um beispielsweise sehr große Gegenstände auf einem unteren Tragboden des erfindungsgemäßen Transportgestells transportieren zu können, ohne daß diese Gegenstände durch weiter oben am Transportgestell vorgesehene Tragböden behindert werden.

Alternativ oder zusätzlich zu dieser Verschwenkbarkeit des wenigstens einen Tragbodens kann vorgesehen sein, daß er herausnehmbar mit der Gestellanordnung aus Rückwand und Seitenwänden verbunden ist. Auf diese Weise können beispielsweise in verschiedenen Bereichen eines Warenlagers einzelne Tragböden mit Waren beladen und anschließend in ein "vorbeifahrendes" erfindungsgemäßes Transportgestelleingehängt werden, so daß ein Anhalten des Transportgestells zum Beladen nicht mehr bzw. nur noch während eines relativ kurzen Zeitraums erforderlich ist und der Arbeitsablauf im Hängeförderungssystems des Warenlagers somit beschleunigt wird. Darüber hinaus bietet die Möglichkeit, die Tragböden aus den Transportgestellen herausnehmen zu können, auch den Vorteil, daß die Dicke der erfindungsgemäßen Transportgestelle kleiner ist als in dem Fall, in dem die Tragböden in eine im wesentlichen vertikale Lagerstellung verschwenkt werden, jedoch am Transportgestell verbleiben, so daß die Transportgestelle dichter ineinander gestapelt werden können.

In einer vorteilhaften Weiterbildung des erfindungsgemäßen Transportgestells ist vorgesehen, daß es wahlweise lösbar mit dem wenigstens einen Laufwerk verbunden ist. Eine solche wahlweise lösbare Verbindung kann in einfacher Weise dadurch erfolgen, daß das Transportgestell mit einer in seinem oberen Bereich vorgesehenen Öse in einen vom unteren Bereich des Laufwerks vorstehenden Haken eingehängt wird. Somit können die erfindungsgemäßen Transportgestelle in einfacher Weise von ihren jeweiligen Laufwerken getrennt und an einem beliebigen Bereich des Warenlagers ineinander gestapelt gelagert werden. Die an der Schiene verbleibenden Laufwerke können zum Transport anderer Gestelle oder sonstiger Gegenstände verwendet werden.

Es ist jedoch aufgrund der bekannten Drehbarkeit derartiger Transportgestelle gegenüber ihren jeweiligen Laufwerken auch möglich, die erfindungsgemäßen Transportgestelle an ihrem jeweiligen Laufwerk hängend in eine zum Stapeln geeignete Orientierung zu drehen und sie dann ineinander zu stapeln, wobei sie weiterhin an der Schiene hängen.

In einer insbesondere zum Transport großer oder schwerer Waren geeigneten Weiterbildung des erfindungsgemäßen Transportgestells ist vorgesehen, daß es an einem Tragbalken hängend angeordnet ist, der zwei mit einem jeweiligen Rollenpaar ausgestattete Laufwerke miteinander verbindet. Durch diese Gestaltung wird nicht nur die Tragfähigkeit des erfindungsgemäßen Transportgestells erhöht, sondern es werden auch die bei der einfacheren Ausführung mit einem Laufwerk pro Transportgestell möglicherweise auftretenden Schaukelbewegungen beim Anfahren und Abbremsen weitgehend vermieden.

Bei dieser Ausführung des erfindungsgemäßen Transportgestells kann zusätzlich oder alternativ zu der oben beschriebenen wahlweise lösbaren Verbindung mit den Laufwerken vorgesehen sein, daß das Transportgestell wahlweise lösbar an dem Tragbalken angeordnet ist. Auch diese wahlweise lösbare Verbindung kann in der oben beschriebenen Weise beispielsweise durch das Einhängen von am Transportgestell vorgesehenen Ösen in am Tragbalken vorgesehene Haken erfolgen. Somit kann das erfindungsgemäße Transportgestell zur platzsparenden Lagerung von der Schiene abgenommen werden, während sein Tragbalken mit zwei Laufwerken an der Schiene verbleibt und somit zum Transport anderer Gestelle oder Waren zur Verfügung steht.

Grundsätzlich ist es möglich, die erfindungsgemäßen Transportgestelle derart asymmetrisch herzustellen, daß die beiden Seitenwände jedes Transportgestells unter verschiedenen Winkeln von der Rückwand nach vorne abstehen. Zur Vereinfachung der Herstellung der erfindungsgemäßen Transportgestelle ist jedoch vorgesehen, daß beide Seitenwände unter gleichen Winkeln relativ zur Rückwand angeordnet sind.

Ferner ist vorzugsweise vorgesehen, daß jeder Tragboden in seiner Transportstellung an der Rückwand und an den Seitenwänden im wesentlichen anliegt. Durch diese Ausführung werden Lücken zwischen den in ihrer Transportstellung befindlichen Tragböden und den Wänden der erfindungsgemäßen Transportgestelle weitgehend vermieden, so daß das auf den Tragböden gestapelte Material an den Wänden abgestützt werden kann und ein Herunterfallen der Waren zwischen den Tragböden und den Wänden im wesentlichen ausgeschlossen werden kann.

In einer vorteilhaften Weiterbildung der Erfindung ist vorgesehen, daß zur lösbaren Befestigung jedes Tragbodens in seiner Transportstellung an jeder Wand, an der er nicht angelenkt ist, jeweils wenigstens eine Klammer vorgesehen ist, die mit dem Tragboden und der jeweiligen Wand in Eingriff bringbar ist. Eine derartige einfach anzubringende Klammer kann beispielsweise aus federndem Metall-Material gebildet sein und die Form eines U aufweisen, dessen Schenkelenden nach innen gebogen sind und das in Aussparungen und/oder in Vorsprünge des Tragbodens und/oder der Wand einhakbar ist. Bei geeigneter Gestaltung der Wände und der Tragböden können derartige Klammern auch zur Anlenkung eines Tragbodens an einer Wand eingesetzt werden.

Besonders schnell und einfach ist eine derartige lösbare Befestigung zu erzielen, wenn die Rückwand und/oder die Seitenwände und/oder der wenigstens eine Tragboden zumindest überwiegend aus Drahtgitter gefertigt sind. Da Drahtgitter im Gegensatz zu Wänden bzw. Böden aus massivem Material selbst ein System von Aussparungen und Vorsprüngen bildet, können bei derartigen erfindungsgemäßen Transportgestellen Tragböden an nahezu jeder beliebigen Stelle des Transportgestells angebracht werden. Somit kann die Zahl der Tragböden pro Transportgestell in Abhängigkeit von den auftretenden Erfordernissen flexibel variiert werden. Darüber hinaus erlauben Wände aus Drahtgitter von allen Seiten die Betrachtung der transportierten Waren. Ferner bietet die Wahl von Drahtgitter gegenüber der Wahl von massivem Material für die Fertigung von Wänden und/oder von Tragböden den Vorteil einer Gewichtsersparnis, so daß die erfindungsgemäßen Transportgestelle leichter zu handhaben sind, insbesondere wenn sie zur platzsparenden Lagerung von ihren Laufwerken getrennt und an andere Bereiche des Warenlagers getragen werden müssen.

In einer vorteilhaften Weiterbildung der Erfindung ist vorgesehen, daß jede Seitenwand einen in Längsrichtung parallel zu ihren Seitenrändern verlaufenden Verstärkungssteg aufweist. Insbesondere bei der Wahl von Drahtgitter für die Fertigung der Wände können derartige Verstärkungsstege die Stabilität der erfindungsgemäßen Transportgestelle erhöhen. Die oben beschriebene wahlweise lösbare Verbindung eines Transportgestells mit einem Tragbalken kann in diesem Fall durch eine entsprechend wahlweise lösbare Verbindung der oberen Enden der Verstärkungsstege mit dem Tragbalken erfolgen.

Alternativ ist es jedoch bei erfindungsgemäßen Transportgestellen mit Tragbalken und Verstärkungsstegen an den Seitenwänden auch möglich, daß der Verstärkungssteg fest mit dem Tragbalken verbunden ist. Ein Abnehmen des erfindungsgemäßen Transportgestells von den Laufwerken zum Zwecke der platzsparenden Lagerung an einem beliebigen Ort des Warenlagers kann in diesem Fall weiterhin durch die wahlweise lösbare Verbindung des Tragbalkens mit den Laufwerken sichergestellt sein.

Die Erfindung wird im folgenden an bevorzugten Ausführungsbeispielen anhand der Zeichnungen erläutert. Es zeigt:
- Fig. 1: eine perspektivische Ansicht einer ersten Ausführungsform des erfindungsgemäßen Transportgestells mit einem Laufwerk in Transportstellung;
- Fig. 2: eine Draufsicht auf das Transportgestell von Fig. 1;
- Fig. 3: eine perspektivische Ansicht einer zweiten Ausführungsform des erfindungsgemäßen Transportgestells mit zwei Laufwerken in Lagerstellung;
- Fig. 4: eine Draufsicht auf das Transportgestell von Fig. 3;
- Fig. 5: eine schematische perspektivische Ansicht eines Schienenbereichs, in dem erfindungsgemäße Transportgestelle platzsparend ineinander gestapelt sind.

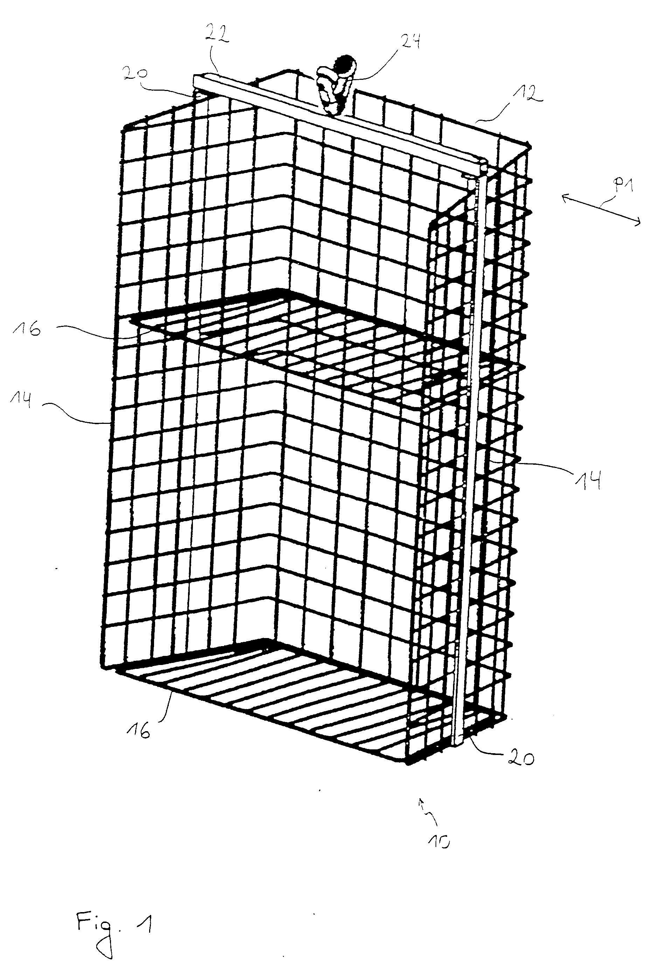

Fig. 1 und 2 zeigen eine erste Ausführungsform eines erfindungsgemäßen Transportgestells 10 für Hängeförderung. Das Transportgestell 10 umfaßt eine Rückwand 12 und zwei Seitenwände 14, die von der Rückwand 12 derart schräg nach vorne und außen abstehen, daß der Abstand zwischen ihren vorderen, d.h. von der Rückwand 12 entfernt liegenden vertikalen Rändern deutlich größer als die Breite der Rückwand 12 ist. Zwischen den beiden Seitenwänden 14 und an diesen sowie an der Rückwand 12 anliegend sind zwei Tragböden 16 in im wesentlichen horizontaler Stellung fixiert.

In der gezeigten Ausführungsform des erfindungsgemäßen Transportgestells 10 sind die Rückwand 12, die Seitenwände 14 und die Tragböden 16 weitgehend aus Drahtgitter gefertigt. Dies ermöglicht eine einfache und flexible Verbindung der Tragböden 16 mit den Wänden 12, 14. Hierzu sind, wie in Fig. 2 zu erkennen ist, vier Klammern 18 pro Tragboden 16 verwendet, von denen zwei der Befestigung des Tragbodens an der Rückwand und zwei weitere Klammern der Anlenkung an je einer Seitenwand 14 dienen. Zur Anlenkung eines Tragbodens könnten aber beispielsweise auch einzelne Stäbe des Drahtgitters eines Tragbodens 16 über den Umfang dieses Tragbodens 16 hinaus verlängert und zu Haken umgebogen sein, welche in einen der in Fig. 1 im wesentlichen horizontal verlaufenden Stäbe der Rückwand 12 oder einer der beiden Seitenwände 14 eingehängt werden können. Auch auf diese Weise entsteht eine gelenkige und wahlweise lösbare Verbindung eines Tragbodens 16 mit einer der Wände 12, 14. Ist beispielsweise bei dem in Fig. 1 gezeigten Transportgestell 10 der obere Tragboden 16 in der beschriebenen Weise an einer Seitenwand 14 angelenkt, und werden alle Klammern 18 entfernt, die den Tragboden 16 in seiner Transportstellung an der Rückwand 12 und der anderen Seitenwand 14 fixieren, so verschwenkt dieser Tragboden 16 selbsttätig in eine im wesentlichen vertikale Lagerstellung, in der er an der Seitenwand 14 anliegt, an welcher er angelenkt ist.

Grundsätzlich ist es möglich, einen Tragboden 16 in der beschriebenen Weise an der Rückwand 12 anzulenken, allerdings kann er dann aus geometrischen Gründen eine im wesentlichen vertikale, an der Rückwand 12 anliegende Lagerstellung nur dann einnehmen, wenn seine Breite in keinem Bereich größer ist als die Breite der Rückwand 12, er also in der Transportstellung in seinem vorderen Bereich nicht an den Seiten wänden 14 anliegt.

Die beschriebene Verbindung eines Tragbodens 16 mit einer Seitenwand 14 erlaubt es nicht nur, den Tragboden 16 in eine im wesentlichen vertikale Lagerstellung zu verschwenken, in welcher er an dieser Seitenwand 14 anliegt, sondern erlaubt es in einfacher Weise auch, den Tragboden 16 aus der Gestellanordnung aus Rückwand 12 und Seitenwänden 14 herauszunehmen und durch das beschriebene Einhaken der über den Tragboden 16 überstehenden Haken in Querstäbe der Seitenwand 14 oder durch entsprechendes Wiedereinsetzen der Klammern 18 in einfacher Weise wieder anzubringen.

Bei der gezeigten Ausführungsform des erfindungsgemäßen Transportgestells 10 weist jede Seitenwand 14 einen ungefähr in ihrer Mitte in Längsrichtung parallel zu ihren Seitenrändern verlaufenden Verstärkungssteg 20 auf. Während dieser Verstärkungssteg 20 an seinem in Fig. 1 unteren Ende mit dem entsprechenden unteren Ende der Seitenwand 14 im wesentlichen abschließt, steht er an seinem in Fig. 1 oberen Ende geringfügig über das entsprechende obere Ende der Seitenwand 14 über und ist nach innen gebogen. Diese oberen Enden der beiden Verstärkungsstege 20 sind mit einem Tragbalken 22 verbunden, der annähernd parallel zum oberen Rand der Rückwand 12 verläuft und der selbst ungefähr in seiner Mitte oben mit einem Laufwerk 24 verbunden ist, welches ein Rollenpaar zur Abstützung an einer in Fig. 1 nicht dargestellten Schiene 26 aufweist und somit die Hängeförderung des Transportgestells 10 an der Schiene 26 erlaubt.

Der in Fig. 1 und 2 eingezeichnete Doppelpfeil P1 kennzeichnet die aus der momentanen Orientierung des Laufwerks 24 relativ zum restlichen Transportgestell 10 resultierende Fahrtrichtung des Transportgestells 10. Man erkennt, daß die auf den Tragböden 16 zu transportierende Ware durch die Seitenwände 14 vor einem Verrutschen bzw. Herunterfallen durch beim Anfahren bzw. Abbremsen auftretende Beschleunigungskräfte geschütztist. Zur weiteren Absicherung der Ware können ggf. nach dem Beladen des Transportgestells 10 zusätzliche Sicherungsmittel wie beispielsweise Gurte im Bereich der vorderen Ränder der Seitenwände 14 derart eingehängt werden, daß sie von einer Seitenwand 14 zur anderen verlaufen und die Ware somit auch an dieser in Fig. 1 und 2 offenen Seite sichern.

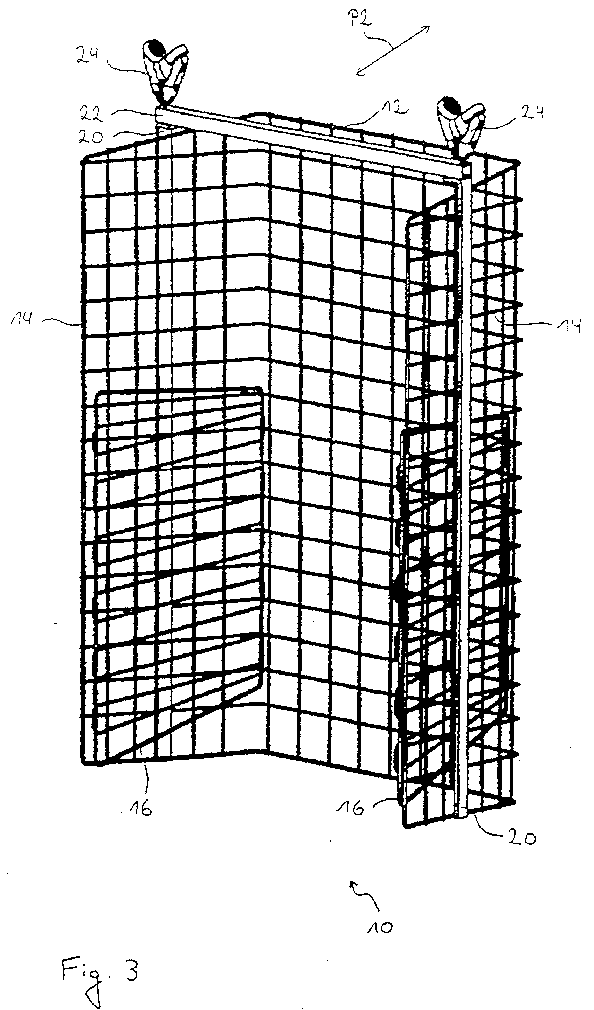

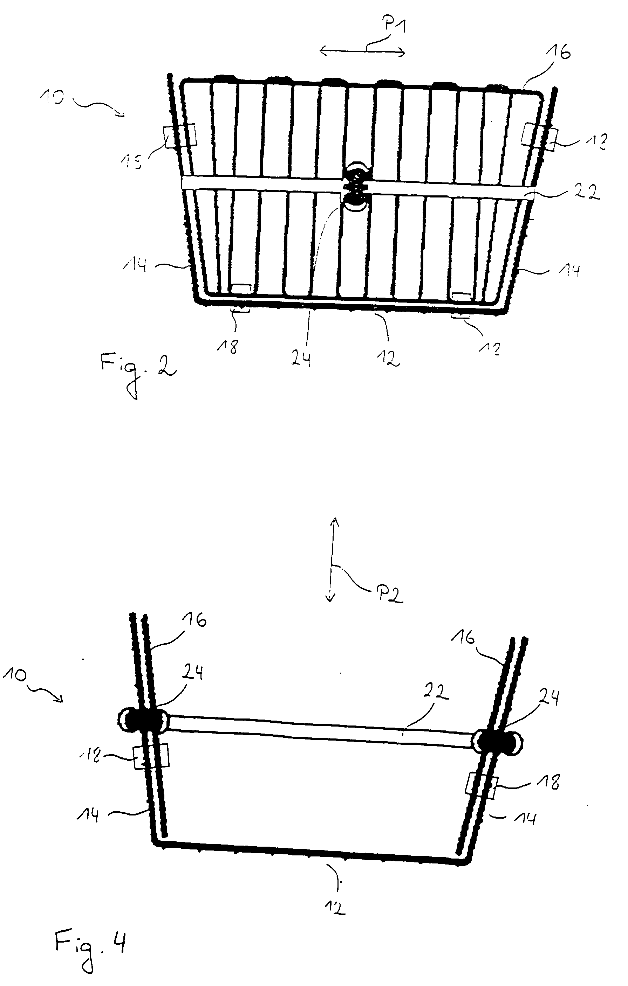

Fig. 3 und 4 zeigen eine zweite Ausführungsform eines erfindungsgemäßen Transportgestells 10, bei der der Tragbalken 22 mit zwei im Bereich seiner Enden angebrachten Laufwerken 24 verbunden ist, so daß dieses Transportgestell 10 größere Lasten transportieren kann. Zudem sind durch das Bereitstellen von zwei Laufwerken 24 Schaukelbewegungen in Längsrichtung, wie sie bei der in Fig. 1 dargestellten Ausführungsform beim Anfahren und beim Abbremsen des Transportgestells 10 auftreten können, weitgehend ausgeschlossen. Ansonsten stimmt die zweite Ausführungsform mit der in Fig. 1 und 2 gezeigten ersten Ausführungsform überein.

Bei dieser zweiten Ausführungsform des Transportgestells 10 sind im gezeigten Zustand die beiden Tragböden 16 jeweils aus einer der Fig. 1 entsprechenden Transportstellung in eine im wesentlichen vertikale Lagerstellung gebracht worden, in der sie jeweils an einer Seitenwand 14 anliegen. Hierzu genügt es, den in Fig. 1 oberen Tragboden um seine Anlenkverbindung an einer Seitenwand 14 nach unten zu verschwenken. Der in Fig. 1 untere Tragboden 16 kann entweder in entsprechender Weise um seine Anlenkverbindung an einer Seitenwand 14 nach oben verschwenkt und dann mit einer Klammer 18, wie sie auch zur lösbaren Befestigung des Tragbodens 16 in seiner Transportstellung vorgesehen ist, an dieser Seitenwand 14 oben befestigt werden, oder der Tragboden 16 kann zunächst ausgehend von seiner Transportstellung vollständig aus der Gestellanordnung aus Rückwand 12 und Seitenwänden 14 herausgenommen und anschließend mit Hilfe von Klammern 18 an einer Seitenwand 14 angehängt werden.

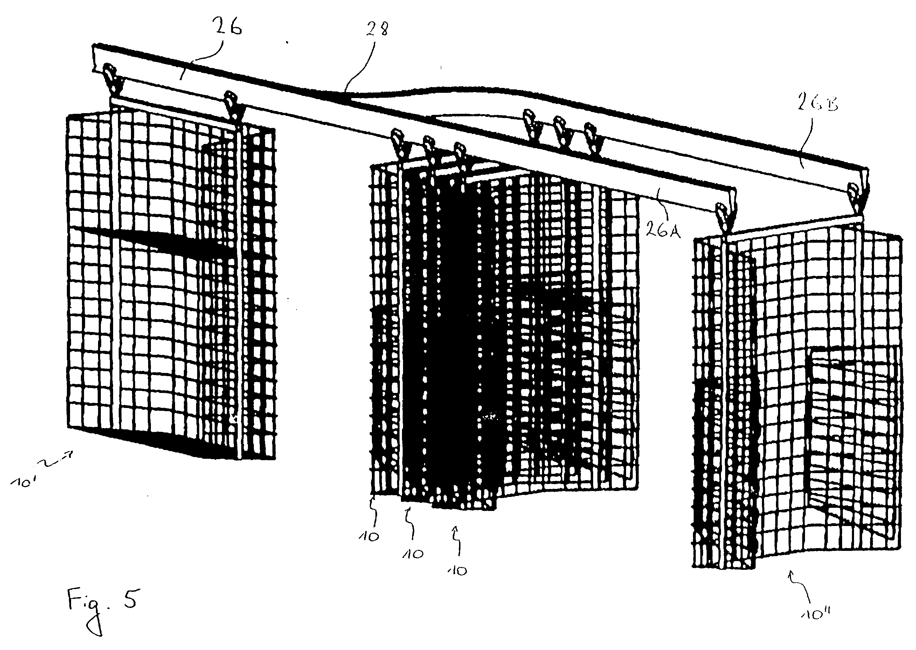

Man erkennt in den Figuren 3 und 4, daß die Orientierung der Laufwerke 24 dieses in Lagerstellung befindlichen Transportgestells 10 gegenüber der Orientierung des Laufwerks 24 des in Transportstellung befindlichen Transportgestells 10 von Fig. 1 gedreht ist. Die entsprechende momentane Fahrtrichtung des Transportgestells 10 ist in den Figuren 3 und 4 durch einen Doppelpfeil P2 angedeutet. Diese Drehbarkeit der Laufwerke 24 gegenüber dem Tragbalken 22 ist eine an sich bekannte Eigenschaft derartiger Transportgestelle, die ihre Kurvenfahrt ermöglicht. Bei den erfindungsgemäßen Transportgestellen 10 kann diese Verdrehbarkeit der Laufwerke 24 bezüglich des Tragbalkens 22 dazu genutzt werden, mehrere Transportgestelle 10 platzsparend ineinander zu stapeln und sie dabei an einer Schiene 26 zu belassen, wie im folgenden anhand von Fig. 5 erläutert werden wird:

Man erkennt in Fig. 5 eine Schienenanordnung, bei der sich eine im linken Bereich von Fig. 5 angedeutete Schiene 26 an einer Weiche 28 in zwei parallel zueinander verlaufende Schienen 26A und 26B teilt. Der Abstand der Schienen 26A und 26B voneinander entspricht hierbei dem Abstand der beiden Laufwerke 24 der in den Figuren 3 und 4 gezeigten zweiten Ausführungsform des erfindungsgemäßen Transportgestells 10. Im Bereich der parallel zueinander verlaufenden Schienen 26A und 26B sind drei an diese angehängte Transportgestelle 10 platzsparend ineinander gestapelt.

Um diesem Stapel ein weiteres Transportgestell, beispielsweise das in Fig. 5 links dargestellte Transportgestell 10' hinzuzufügen, wird wie folgt vorgegangen: Zunächst werden bei dem Transportgestell 10', welches in Fig. 5 in seiner Transportstellung gezeigt ist, in der oben beschriebenen Weise die Tragböden 16 in ihre Lagerstellung gebracht. Anschließend wird das Transportgestell 10' auf die Weiche 28 bewegt, die auf eine Verbindung der Schiene 26 mit der in Fig. 5 hinteren Schiene 26B geschaltet ist. Sobald das in Fahrtrichtung vordere Laufwerk 24 des Transportgestells 10' somit auf die Schiene 26B gelaufen ist, wird die Weiche 28 auf eine Verbindung der Schiene 26 mit der in Fig. 5 vorderen Schiene 26A umgeschaltet und das Transportgestell 10' weiterbewegt. Das Transportgestell 10' weist dann die gleiche Orientierung auf wie das in Fig. 5 rechts dargestellte Transportgestell 10''. In dieser Orientierung kann das Transportgestell 10' dann zur platzsparenden Lagerung dicht an den bereits vorhanden Stapel herangeschoben werden.

Die Schienen 26A und 26B können an ihrem in Fig. 5 rechten Ende jeweils durch Abschlußelemente begrenzt sein, so daß das zuletzt dem Stapel hinzugefügte Transportgestell 10' auch das erste dem Stapel wieder zu entnehmende ist. Es ist jedoch auch möglich, die Schienen 26A und 26B an ihrem in Fig. 5 rechten Ende mittels einer weiteren Weiche 28 zu einer weiteren Schiene 26 führen zu lassen, so daß auch das Transportgestell 10'' sofort aus seiner Lagerstellung geholt und für Transportzwecke eingesetzt werden kann.

Man erkennt, daß Transportgestelle 10 der in Fig. 1 und 2 gezeigten ersten Ausführungsform mit einem einzigen Laufwerk 24 ohne Anordnungen mit Weichen 28 und parallel zueinander verlaufenden Schienen 26A und 26B an einer einzigen Schiene platzsparend ineinander gestapelt werden können.

Die Erfindung ist nicht auf die beispielhaft beschriebenen Transportgestelle 10 beschränkt. Vielmehr ist es beispielsweise auch möglich, Transportgestelle mit drei oder mehr Laufwerken einzusetzen. Ebenso ist es möglich, die Tragböden 16 eines Transportgestells 10 aus anderen Materialien als seine Wände 12, 14 herzustellen, beispielsweise derart, daß die Wände 12, 14 in der beschriebenen Weise überwiegend aus Drahtgitter gefertigt sind, wohingegen die Tragböden 16 als massive Platten aus Metall, Kunststoff oder dergleichen gefertigt sind. Hierdurch können auf den Tragböden 16 auch sehr kleine Gegenstände transportiert werden, die durch einen aus Drahtgitter gefertigten Tragboden 16 hindurchfallen würden. Gleichzeitig bleibt der Vorteil erhalten, daß die Tragböden 16 in flexibler Weise an nahezu beliebigen Stellen innerhalb der Gestellanordnung aus Rückwand 12 und Seitenwänden 14 eingehängt werden können. Schließlich ist es bei ausreichendem Abstand der an der Schiene 26 hängenden Transportgestelle 10 zum Boden auch möglich, die Tragböden 16 in ihrer im wesentlichen vertikalen Lagerstellung am unteren Rand der Rückwand 12 oder einer Seitenwand 14 einzuhängen, so daß sie bei der in Fig. 5 dargestellten Lagerung an der Schiene 26 jeweils unten an den Transportgestellen 10 hängen. Hierdurch wird die Dicke jedes in seiner Lagerstellung befindlichen Transportgestells 10 verringert, so daß die erzielbare Stapeldichte der erfindungsgemäßen Transportgestelle 10 weiter erhöht wird.

## Patentansprüche

1. Transportgestell (10) für Hängeförderung, das an wenigstens einem mit einem Rollenpaar zur Abstützung an einer Schiene (26) versehenen Laufwerk (24) hängend längs der Schiene (26) verfahrbar ist und eine Rückwand (12) sowie zwei von der Rückwand (12) nach vorn abstehende Seitenwände (14) aufweist, zwischen denen wenigstens ein Tragboden (16) in einer im wesentlichen horizontalen Transportstellung fixierbar ist, dadurch gekennzeichnet, daß die Seitenwände (14) starr von der Rückwand (12) abstehen, derart, daß der Abstand zwischen den vorderen Rändern der Seitenwände (14) größer ist als die Breite der Rückwand (12), so daß mehrere Transportgestelle (10) mit aus der Transportstellung entfernten Tragböden (16) ineinander stapelbar sind.

2. Transportgestell (10) nach Anspruch 1, dadurch gekennzeichnet, daß der wenigstens eine Tragboden (16) zwischen der Transportstellung und einer im wesentlichen vertikalen Lagerstellung verschwenkbar an der Rückwand (12) oder einer Seitenwand (14) angelenkt ist, so daß mehrere Transportgestelle (10) mit in Lagerstellung befindlichen Tragböden (16) ineinander stapelbar sind.

3. Transportgestell (10) nach Anspruch 1 oder 2, dadurch gekennzeichnet, daß der wenigstens eine Tragboden (16) herausnehmbar mit der Gestellanordnung aus Rückwand (12) und Seitenwänden (14) verbunden ist.

4. Transportgestell (10) nach einem der vorhergehenden Ansprüche, dadurch gekennzeichnet, daß es wahlweise lösbar mit dem wenigstens einen Laufwerk (24) verbunden ist.

5. Transportgestell (10) nach einem der vorhergehenden Ansprüche, dadurch gekennzeichnet, daß es an einem Tragbalken (22) hängend angeordnet ist, der zwei mit einem jeweiligen Rollenpaar ausgestattete Laufwerke (24) miteinander verbindet.

6. Transportgestell (10) nach Anspruch 5, dadurch gekennzeichnet, daß es wahlweise lösbar an dem Tragbalken (22) angeordnet ist.

7. Transportgestell (10) nach einem der vorhergehenden Ansprüche, dadurch gekennzeichnet, daß beide Seitenwände (14) unter gleichen Winkeln relativ zur Rückwand (12) angeordnet sind.

8. Transportgestell (10) nach einem der vorhergehenden Ansprüche, dadurch gekennzeichnet, daß jeder Tragboden (16) in seiner Transportstellung an der Rückwand (12) und an den Seitenwänden (14) im wesentlichen anliegt.

9. Transportgestell (10) nach einem der vorhergehenden Ansprüche, dadurch gekennzeichnet, daß zur lösbaren Befestigung jedes Tragbodens (16) in seiner Transportstellung an jeder Wand, an der er nicht angelenkt ist, jeweils wenigstens eine Klammer (18) vorgesehen ist, die mit dem Tragboden (16) und der jeweiligen Wand in Eingriff bringbar ist.

10. Transportgestell (10) nach einem der vorhergehenden Ansprüche, dadurch gekennzeichnet, daß die Rückwand (12) und/oder die Seitenwände (14) und/oder der wenigstens eine Tragboden (16) zumindest überwiegend aus Drahtgitter gefertigt sind.

11. Transportgestell (10) nach einem der vorhergehenden Ansprüche, dadurch gekennzeichnet, daß jede Seitenwand (14) einen in Längsrichtung parallel zu ihren Seitenrändern verlaufenden Verstärkungssteg (20) aufweist.

12. Transportgestell (10) nach Anspruch 5 und 11, dadurch gekennzeichnet, daß der Verstärkungssteg (20) fest mit dem Tragbalken (22) verbunden ist.
